# EUROPEAN PATENT SPECIFICATION

(11) **EP 2 838 223 B1**
(45) Date of publication and mention of the grant of the patent: **05.08.2020**
(21) Application number: 13775441.2
(22) Date of filing: 29.01.2013
(51) Int. Cl.: H04W 12/00

(54) **SECURE IDENTITY DISCOVERY METHOD**
SICHERES IDENTITÄTSERKENNUNGSVERFAHREN
PROCÉDÉ DE DÉCOUVERTE D'IDENTITÉ SÉCURISÉE

(30) Priority: 11.04.2012 CN 201210104823
(43) Date of publication of application: 18.02.2015
(73) Proprietor: Huawei Technologies Co., Ltd., Longgang District Shenzhen, Guangdong 518129 (CN)
(72) Inventor: HUANG, Kaidi, Shenzhen Guangdong 518129 (CN); YANG, Guorui, Shenzhen Guangdong 518129 (CN); XIA, Linfeng, Shenzhen Guangdong 518129 (CN)
(74) Representative: Isarpatent
(86) International application number: PCT/CN2013/071075
(87) International publication number: WO 2013/152635

(56) References cited:
- EP-A1- 1 978 698
- WO-A1-2007/115469
- CN-A- 101 001 253
- CN-A- 101 001 261
- CN-A- 101 056 258
- US-A1- 2006 274 643
- US-A1- 2010 246 502

## Description

### FIELD OF THE INVENTION

The present invention relates to wireless communication networks, and in particular to a security identity discovery method and a security communication method.

### BACKGROUND OF THE INVENTION

802.11 is a wireless local area network standard formulated by IEEE (Institute of Electrical and Electronics Engineers, Institute of Electrical and Electronics Engineers), and 802.11 is mainly used for realizing wireless access of users and user terminals in office local area network and campus network.

The IEEE 802.11 technology is configured to formulate a universal MAC (Medium Access Control, Medium Access Control) layer for a plurality of PHYs (Physical Layer, Physical Layer) to standardize the construction of wireless local area networks. Wherein the main task of the medium access control layer (MAC) is to establish an addressing and channel access control mechanism for multiple stations in the same network, for making communication between the multiple stations become possible.

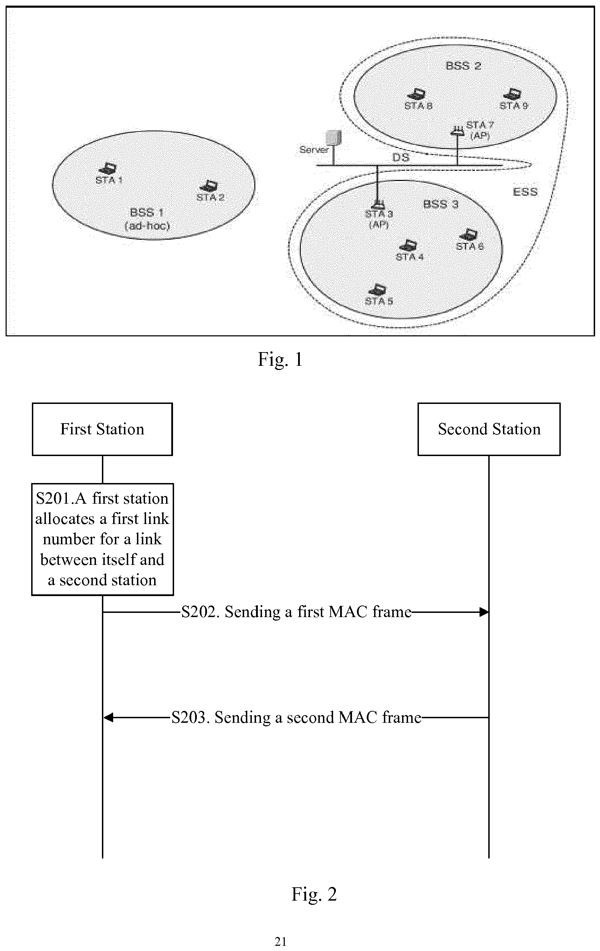

The essential component of WLAN (Wireless Local Area Networks, Wireless Local Area Networks) is BSS (Basic Service Set, Basic Service Set), which is composed of stations STA having certain association within a particular coverage area, for example, BSS2 and BSS3 as shown in Fig.1. In a BSS network, a central station performing full-time management on BSS is called as an AP (Access Point, Access Point), and other stations STA in the network are associated with the AP. A plurality of BSS networks are mutually connected through a DS to form an ESS (Extended Service Set, Extended Service Set). In the absence of the AP, the stations STA may also establish mutual direct communication by self-networking, and the network is an independent BSS or IBSS, namely, BSS1 as shown in Fig.1.

NAN (Neighborhood Area Network, Neighborhood Area Network) is a project group established by WFA in December, 2011, and is committed to wireless equipment to acquire information mutually in a direct connection manner, at a pre-association state, under the condition of low energy consumption, without the assistance of transfer equipment (such as AP or base station, etc). The following three requirements are mainly carried: 1. low power consumption (energy saving); 2. no transfer equipment and direct connection; and 3. at the pre-association state (only sending of Class 1 information may be implemented). Wherein the Class 1 information carries Control Frames (control frames), Management frames (management frames) and Data frames (data frames).

In NAN technology, mutual discovery of the stations is mainly achieved by broadcasting beacon frames. Namely, the station periodically broadcasts and sends beacon frames carrying its own information on a certain channel, with a random event as a starting point, in accordance with a certain beacon frame sending period (the value range is 20 ms to 1000 ms and the preset value is 100 ms). A surrounding station thereof learns about the existence of the station and the information of the station by receiving and interpreting the information of the broadcasted beacon frame.

An MAC address, also called as a hardware address, is configured to define the location of network equipment, and is composed of 48-bit long hexadecimal digits, 0^{th}-23^{rd} bits are organization unique identifiers and are marks for identifying local area network nodes, and 24^{th}-47^{th} bits are assigned by network equipment manufacturers themselves. The format of a first MAC frame is as shown in Table 1:

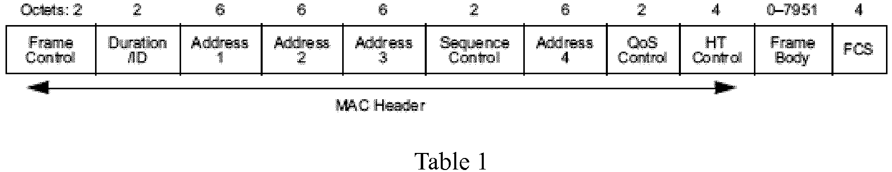

Wherein the Address 1 field is filled with an immediate receiving address of the frame; the Address 2 field is filled with an immediate sending address of the frame; and the Frame Body field is loaded with an upper layer content to be transmitted through an MAC packet (for example, IP packet). The MAC addresses are unique identifiers of the stations within the communication range of the MAC layer, so that when monitoring the appearance of a beacon frame carrying a certain MAC address in the channel, the surrounding station may determine the existence of a station corresponding to the MAC address around itself.

The beacon frames broadcasted by the stations may be received by any station around. Also, since no key negotiation is implemented between the stations at a Pre-Association (Pre-Association) state, the stations could not encrypt the beacon frames broadcasted by themselves, so that the beacon frames at the broadcasting sites of the stations may be interpreted by any station around, the own MAC address information carried in the beacon frames may also be learnt by any station around, and the disclosure of the MAC address information will result in that the privacy of users of the stations will be unprotected.

Document (WO 2007/115469A1) discloses a method for reducing information redundancy, wherein all links of each AP and non-AP user terminal use a link identifier to replace a MAC source address and a MAC destination address, and the link identifier can identify a MAC destination address and a MAC source address.

Document (EP 1978698A1) discloses a communication method. The method comprises: a mobile node accesses a network at an access location and calculates a private identifier PID using the care-of address. The mobile node replaces its home address with the PID and sends a binding update message to a home agent, so that the home agent recovers the home address HoA of the mobile node.

Document D3 (US 2006/274643A1) discloses a method for increasing the level of security since the MAC addresses of the AP and MC are always protected. The source MAC address of the Wireless device will be mixed using a Random value. Similarly, the destination's MAC address is also mixed using the same Random value. The Random value is added in order to avoid re-play attacks.

### SUMMARY OF THE INVENTION

The present invention provides a security identity communication method, in order to improve the degree of privacy protection during communications of stations, including:
a first station sends a first medium access control (MAC) frame to a second station, wherein the first MAC frame carries a first link number and an indicating field, the first link number is used for identifying the identities of the first station and the second station, and the indicating field indicates that the first MAC frame carries the first link number;
the first station receives a second MAC frame sent by the second station, wherein the second MAC frame carries a second link number and an indicating field, the second link number is used for identifying the identities of the first station and the second station, and the indicating field indicates that the second MAC frame carries the second link number.

The present invention further provides a first station for security identity communication, including:
a sending module, configured to send a first medium access control (MAC) frame to a second station, wherein the first MAC frame carries a first link number and an indicating field, the first link number is used for identifying the identities of the first station and the second station, and the indicating field indicates that the first MAC frame carries the first link number; and
a receiving module, configured to receive a second MAC frame sent by the second station, wherein the second MAC frame carries a second link number and an indicating field, the second link number is used for identifying the identities of the first station and the second station, and the indicating field indicates that the second MAC frame carries the second link number.

According to the security identity communication method provided by the present invention, frames for communication between the first station and the second station all hide or omit real MAC addresses of the two stations, but identify the identities of the two stations by using the first link number, so as to perform security communication, thereby improving the degree of privacy protection when a user uses wireless communication.

### BRIEF DESCRIPTION OF THE DRAWINGS

Fig. 1 is a concept map of IBSS, BSS and ESS of WLAN in the prior art;
Fig.2 is a flowchart of a security identity communication method provided by an embodiment of the present invention;
Fig. 3 is a structure diagram of a first station for security identity communication provided by an embodiment of the present invention;
Fig.4 is a structure diagram of a second station for security identity communication provided by an embodiment of the present invention;
Fig. 5 is a structure diagram of a system for security identity communication provided by an embodiment of the present invention;

### DETAILED DESCRIPTION OF THE EMBODIMENTS

In order that those who skilled in the art can better understand the technical solutions of the present invention, a clear and complete description of the technical solutions of the embodiments of the present invention will be given below, in combination with the accompanying drawings in the embodiments of the present invention. Apparently, the embodiments described are merely a part, but not all, of the embodiments of the present invention. All of other embodiments, obtained by those skilled in the art based on the embodiments of the present invention without any inventive efforts, fall into the protection scope of the present invention.

In this paper, the terms 'system' and 'network' are often used interchangeably. In this paper, the term 'and/or' is merely a description of association relation of associated objects, and expresses three possible relations, for example, A and/or B, may express three conditions of: single existence of A, simultaneous existence of A and B and single existence of B. In addition, in this paper, the character '/' generally expresses an 'or' relation of former and latter associated objects.

It should be understood that, the technical solutions of the embodiments of the present invention may be applied to various communication systems, for example: GSM (Global System of Mobile communication, Global System of Mobile communication) system, CDMA (Code Division Multiple Access, Code Division Multiple Access) system, WCDMA (Wideband Code Division Multiple Access, Wideband Code Division Multiple Access) system, GPRS (General Packet Radio Service, General Packet Radio Service), LTE (Long Term Evolution, Long Term Evolution) system, FDD-LTE (Frequency Division Duplex, Frequency Division Duplex) system, TDD-LTE (Time Division Duplex, Time Division Duplex), UMTS (Universal Mobile Telecommunication System, Universal Mobile Telecommunication System), WiMAX (Worldwide Interoperability for Microwave Access, Worldwide Interoperability for Microwave Access) communication system, microwave communication system, etc.

### First embodiment:

The first embodiment of the present invention provides a security identity communication method, and Fig.2 shows a schematic flowchart of the method. As shown in Fig.2, the method includes:
S201. a first station allocates a first link number for a link between itself and a second station;
   preferably, the first link number may be allocated by the second station for a link between itself and the first station; and
   preferably, the first link number may be allocated by a third station for a link between the first station and the second station.
S202. the first station sends a first MAC frame to the second station;
   the first MAC frame carries the first link number, allocated by the first station for the link between itself and the second station, or allocated by the second station for the link between itself and the first station, or allocated by the third station for the link between the first station and the second station in the step S201, and an indicating field, wherein the first link number is configured to identify the identities of the first station and the second station, and the indicating field is configured to indicate that the first MAC frame carries the first link number; and
   the first station may send the first MAC frame to a plurality of second stations in a broadcasting manner, and use the first link number to identify the identities of the first station and the plurality of second stations.

Preferably, the first link number is further used to indicate the flow direction of a data packet between the first station and the second station, namely, indicating that the data packet is sent by the first station to the second station.

Preferably, the first station may fill the Address 1 field of the first MAC frame with the first link number and fill the Address 2 field with the indicating field, for example, all are 1, and when the indicating field is a particular value, it indicates that the first MAC frame carries the first link number.

It should be noted that the first MAC frame hides or omits the real MAC addresses of the two stations, so that when the two stations communicate, the real MAC addresses thereof will not be disclosed because other stations receive the first MAC frame.

Preferably, the frame structure of the first MAC frame is as shown in Table 2:

**Table 2**

| | | | | | | | | |
|---|---|---|---|---|---|---|---|---|
| Frame Control | Duration/ ID | Link Number | Indicating Field | Sequence Control | QoS Control | HT Control | Payload | FCS |

Wherein, Payload is a packaged transmission content. The Payload may be a specific data content or a packaged frame body, and the address bit of the first MAC frame is vacant or omitted.

S203. the second station sends a second MAC frame to the first station;
the second MAC frame carries a second link number and an indicating field, wherein the second link number is used for identifying the identities of the two stations, and the indicating field indicates that the second MAC frame carries the second link number.

The second station may fill the Address 1 field of the second MAC frame with the second link number and fill the Address 2 field with the indicating field, for example, all are 1, and when the indicating field is a particular value, it indicates that the second MAC frame carries the second link number.

It should be noted that the second MAC frame hides or omits the real MAC addresses of the two stations, so that when the two stations communicate, the real MAC addresses thereof will be not disclosed because other stations receive the second MAC frame.

Preferably, the frame structure of the second MAC frame is shown in the Table 2, wherein Payload is a packaged transmission content. The Payload may be a specific data content or a packaged frame body, and the address bit of the second MAC frame is vacant or omitted.

Preferably, the second link number is the same as the first link number, or the second link number is obtained by changing the numerical value of a specific position of the first link number, is used for identifying the identities of the two stations, and indicates the flow direction of the data packet between the two stations, namely, indicating that the data packet is sent by the second station to the first station; and the indicating field indicates that the second MAC frame carries the second link number.

The second station may fill the Address 1 field of the second MAC frame with the second link number and fill the Address 2 field with the indicating field, for example, all are 1, and when the indicating field is a particular value, it indicates that the second MAC frame carries the second link number.

According to the security identity communication method provided by the embodiment, the first station and the second station identify their identities by using the link numbers for communication, furthermore, message frames in the embodiment all hide or omit the real MAC addresses of the two stations, thereby improving the degree of privacy protection when the user uses wireless communication.

### Second embodiment:

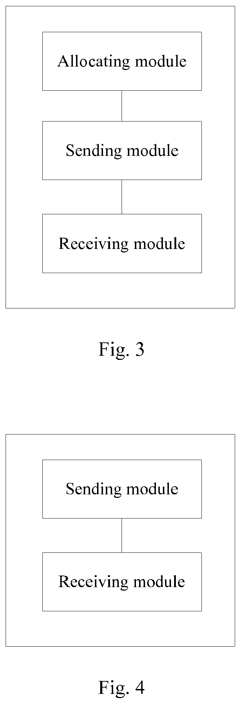

The second embodiment of the present invention provides a first station for security identity communication, and Fig.3 shows the schematic structure diagram of the station. As shown in Fig.3, the station includes:
a sending module, configured to send a first MAC frame to the second station, wherein the first MAC frame carries the first link number and an indicating field; the first link number is used for identifying the identities of the first station and the second station, and the indicating field indicates that the first MAC frame carries the first link number; and
a receiving module, configured to receive a second MAC frame sent by the second station, wherein the second MAC frame carries a second link number and an indicating field; the second link number is used for identifying the identities of the first station and the second station, and the indicating field indicates that the second MAC frame carries the second link number.

Preferably, the first station further includes an allocating module, for enabling the first station to allocate the first link number for a link between itself and the second station.

Preferably, the second link number is the same as the first link number, or the second link number is obtained by changing the numerical value of a specific position of the first link number.

Preferably, the indicating field may be an address field of the first MAC frame and/or the second MAC frame, when the indicating field is set to a particular value, it indicates that the first MAC frame and/or the second MAC frame carries the first link number.

Preferably, the first MAC frame and/or the second MAC frame carries a packaged transmission content Payload, and the Payload is a specific data content or a packaged frame body.

It should be noted that the first MAC frame and the second MAC frame hide or omit the real MAC addresses of the two stations, so that when the two stations communicate, the real MAC addresses thereof will not be disclosed because other stations receive the first MAC frame and the second MAC frame.

### Third embodiment:

The third embodiment of the present invention provides a second station for security identity communication, and Fig.4 shows the schematic structure diagram of the station. As shown in Fig.4, the station includes:
a receiving module, configured to receive a first MAC frame sent by a first station, wherein the first MAC frame carries a first link number and an indicating field; the first link number is used for identifying the identities of the first station and the second station, and the indicating field indicates that the first MAC frame carries the first link number; and
a sending module, configured to send a second MAC frame to the first station, wherein the second MAC frame carries a second link number and an indicating field; the second link number is used for identifying the identities of the first station and the second station, and the indicating field indicates that the second MAC frame carries the second link number.

Preferably, the second station further includes an allocating module, wherein the allocating module is configured to enable the second station to allocate the first link number for a link between itself and the first station.

Preferably, the second link number is the same as the first link number, or the second link number is obtained by changing the numerical value of a specific position of the first link number.

Preferably, the indicating field may be an address field of the first MAC frame and/or the second MAC frame, when the indicating field is a particular value, it indicates that the first MAC frame and/or the second MAC frame carries the first link number.

Preferably, the first MAC frame and/or the second MAC frame carries a packaged transmission content Payload, and the Payload is a specific data content or a packaged frame body.

### Fourth embodiment:

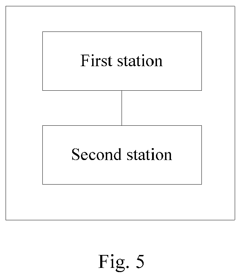

The fourth embodiment of the present invention provides a security identity communication system, and Fig. 5 shows the schematic structure diagram of the station. As shown in Fig.5, the system includes the first station in the second embodiment and the second station in the third embodiment.

Or, the system includes the first station in the second embodiment and the preferred embodiment thereof, and the second station in the third embodiment and the preferred embodiment thereof.

Those skilled in the art to which the present invention pertains may clearly understand that, for convenience and simplicity of description, the specific working process of the devices and units described above may refer to the corresponding process in the above-mentioned method embodiment, and will not be repeated redundantly herein.

In the several embodiments provided by the present invention, it should be understood that the disclosed device and method may be implemented in other manners. For example, the device embodiment described above is merely exemplary, e.g., the division of the units is only a logic function division, other division manners may exist in practical implementation, for example, a plurality of units or components may be combined or integrated to another system, or some features may be omitted or not implemented. From another point of view, the displayed or discussed mutual coupling or direct coupling or communication connection may be indirect coupling or communication connection of devices or units through some interfaces, and may be in electrical, mechanical or other forms.

The units described as separate components may be separated physically or not, the components displayed as units may be physical units or not, namely, may be located in one place, or may be distributed on a plurality of network units. Apart of or all of the units may be selected to achieve the purpose of the embodiment according to actual demand.

In addition, the functional units in the embodiments of the present invention may be integrated in a processing unit, or the units singly exist physically, or two or more units are integrated in one unit. The above-mentioned integrated unit may be implemented in the form of hardware and may also be implemented in the form of a software functional unit.

When the integrated unit is implemented in the form of the software functional unit and is sold or used as an independent product, it may be stored in a computer readable storage medium. Based on this understanding, the technical solutions of the present invention substantially, or the part contributing to the prior art, or all or a part of the technical solutions may be implemented in the form of a software product, the computer software product is stored in a storage medium, and includes a plurality of instructions enabling computer equipment (may be a personnel computer, a server, or network equipment, etc.) to execute all or a part of the methods in the embodiments of the present invention. The foregoing storage medium includes a variety of media capable of storing program codes, such as a USB disk, a mobile hard disk, a read-only memory (ROM, Read-Only Memory), a random access memory (RAM, Random Access Memory), a magnetic disk, an optical disk or the like.

The foregoing descriptions are merely preferred implementations of the present invention, for enabling those skilled in the art to understand or implement the present invention. Therefore, the present invention will not be limited to these embodiments described in this paper, but conforms to the widest range consistent with the principles and novel features disclosed in this paper.

## Claims

1. A security communication method, **characterized by** comprising:
sending (S202), by a first station, a first medium access control, MAC, frame to a second station, wherein the first MAC frame carries a first link number and an indicating field, the first link number is used for identifying the identities of the first station and the second station, and the indicating field indicates, when set to a particular value, that the first MAC frame carries the first link number;
receiving (S203), by the first station, a second MAC frame sent by the second station, wherein the second MAC frame carries a second link number and an indicating field, the second link number is used for identifying the identities of the first station and the second station, and the indicating field indicates, when set to a particular value, that the second MAC frame carries the second link number;
wherein the indicating field is an address field of the first MAC frame and the second MAC frame; being the first MAC frame and the second MAC frame of the standard 802.11 format.

2. The method of claim 1, wherein the first link number is allocated by the first station for a link between the first station and the second station; or allocated by the second station for a link between the second station and the first station; or allocated by a third station for a link between the first station and the second station.

3. The method of claim 1, wherein the second link number is the same as the first link number, or the second link number is obtained by changing the numerical value of a specific position of the first link number.

4. A first station for security identity communication, **characterized by** comprising:
a sending module, configured to send a first medium access control, MAC, frame to a second station, wherein the first MAC frame carries a first link number and an indicating field, the first link number is used for identifying the identities of the first station and the second station, and the indicating field indicates, when set to a particular value, that the first MAC frame carries the first link number; and
a receiving module, configured to receive a second MAC frame sent by the second station, wherein the second MAC frame carries a second link number and an indicating field, the second link number is used for identifying the identities of the first station and the second station, and the indicating field indicates, when set to a particular value, that the second MAC frame carries the second link number;
wherein the indicating field is an address field of the first MAC frame and the second MAC frame; being the first MAC frame and the second MAC frame of the standard 802.11 format.

5. The first station of claim 4, wherein the first station further comprises an allocating module, which is configured to enable the first station to allocate the first link number for a link between the first station and the second station.

6. The first station of claim 4, wherein the second link number is the same as the first link number, or the second link number is obtained by changing the numerical value of a specific position of the first link number.

## Patentansprüche

1. Sicherheitskommunikationsverfahren, **dadurch gekennzeichnet, dass** es Folgendes aufweist:
Senden (S202), durch eine erste Station, eines ersten Medienzugangssteuerungs(MAC)-Rahmens an eine zweite Station, wobei der erste MAC-Rahmen eine erste Verbindungsnummer und ein anzeigendes Feld trägt, wobei die erste Verbindungsnummer zum Identifizieren der Identitäten der ersten Station und der zweiten Station verwendet wird, und wobei das anzeigende Feld, wenn es auf einen bestimmten Wert gesetzt ist, anzeigt,
dass der erste MAC-Rahmen die erste Verbindungsnummer trägt;
Empfangen (S203), durch die erste Station, eines zweiten MAC-Rahmens, gesendet von der zweiten Station, wobei der zweite MAC-Rahmen eine zweite Verbindungsnummer und ein anzeigendes Feld trägt, wobei die zweite Verbindungsnummer zum Identifizieren der Identitäten der ersten Station und der zweiten Station verwendet wird, und wobei das anzeigende Feld, wenn es auf einen bestimmten Wert gesetzt ist, anzeigt,
dass der zweite MAC-Rahmen die zweite Verbindungsnummer trägt;
wobei das anzeigende Feld ein Adressfeld des ersten MAC-Rahmens und des zweiten MAC-Rahmens ist; wobei der erste MAC-Rahmen und der zweite MAC-Rahmen dem Format nach dem Standard 802.11 folgen.

2. Verfahren nach Anspruch 1, wobei die erste Verbindungsnummer durch die erste Station für eine Verbindung zwischen der ersten Station und der zweiten Station zugeordnet wird; oder durch die zweite Station für eine Verbindung zwischen der zweiten Station und der ersten Station zugeordnet wird; oder durch die dritte Station für eine Verbindung zwischen der ersten Station und der zweiten Station zugeordnet wird.

3. Verfahren nach Anspruch 1, wobei die zweite Verbindungsnummer die gleiche wie die erste Verbindungsnummer ist oder die zweite Verbindungsnummer durch Ändern des numerischen Wertes einer spezifischen Position der ersten Verbindungsnummer erhalten wird.

4. Erste Station für Sicherheitsidentitätskommunikation, **dadurch gekennzeichnet, dass** sie Folgendes aufweist:
ein Sendemodul, ausgebildet zum Senden eines ersten Medienzugangssteuerungs(MAC)-Rahmens an eine zweite Station, wobei der erste MAC-Rahmen eine erste Verbindungsnummer und ein anzeigendes Feld trägt, wobei die erste Verbindungsnummer zum Identifizieren der Identitäten der ersten Station und der zweiten Station verwendet wird, und wobei das anzeigende Feld, wenn es auf einen bestimmten Wert gesetzt ist, anzeigt,
dass der erste MAC-Rahmen die erste Verbindungsnummer trägt; und
ein Empfangsmodul, ausgebildet zum Empfangen eines zweiten MAC-Rahmens, gesendet von der zweiten Station, wobei der zweite MAC-Rahmen eine zweite Verbindungsnummer und ein anzeigendes Feld trägt, wobei die zweite Verbindungsnummer zum Identifizieren der Identitäten der ersten Station und der zweiten Station verwendet wird, und wobei das anzeigende Feld, wenn es auf einen bestimmten Wert gesetzt ist, anzeigt,
dass der zweite MAC-Rahmen die zweite Verbindungsnummer trägt;
wobei das anzeigende Feld ein Adressfeld des ersten MAC-Rahmens und des zweiten MAC-Rahmens ist; wobei der erste MAC-Rahmen und der zweite MAC-Rahmen dem Format nach dem Standard 802.11 folgen.

5. Erste Station nach Anspruch 4, wobei die erste Station ferner ein Zuordnungsmodul aufweist, das dazu ausgebildet ist, der ersten Station zu ermöglichen, die erste Verbindungsnummer für eine Verbindung zwischen der ersten Station und der zweiten Station zuzuordnen.

6. Erste Station nach Anspruch 4, wobei die zweite Verbindungsnummer die gleiche wie die erste Verbindungsnummer ist oder die zweite Verbindungsnummer durch Ändern des numerischen Wertes einer spezifischen Position der ersten Verbindungsnummer erhalten wird.

## Revendications

1. Procédé de communication sécurisée, **caractérisé en ce qu'**il comprend :
l'envoi (S202), par une première station, d'une première trame de type commande d'accès au support, MAC, à une deuxième station, la première trame MAC véhiculant un premier numéro de liaison et un champ indicateur, le premier numéro de liaison servant à identifier les identités de la première station et de la deuxième station et le champ indicateur indiquant, lorsqu'il est fixé à une valeur particulière, que la première trame MAC véhicule le premier numéro de liaison ;
la réception (S203), par la première station, d'une deuxième trame MAC envoyée par la deuxième station, la deuxième trame MAC véhiculant un deuxième numéro de liaison et un champ indicateur, le deuxième numéro de liaison servant à identifier les identités de la première station et de la deuxième station et le champ indicateur indiquant, lorsqu'il est fixé à une valeur particulière, que la deuxième trame MAC véhicule le deuxième numéro de liaison ;
le champ indicateur étant un champ d'adresse de la première trame MAC et de la deuxième trame MAC ; la première trame MAC et la deuxième trame MAC étant au format de la norme 802.11.

2. Procédé selon la revendication 1, dans lequel le premier numéro de liaison est alloué par la première station pour une liaison entre la première station et la deuxième station ; ou alloué par la deuxième station pour une liaison entre la deuxième station et la première station ; ou alloué par une troisième station pour une liaison entre la première station et la deuxième station.

3. Procédé selon la revendication 1, dans lequel le deuxième numéro de liaison est le même que le premier numéro de liaison, ou le deuxième numéro de liaison est obtenu par modification de la valeur numérique d'une position spécifique du premier numéro de liaison.

4. Première station pour la communication sécurisée d'identités, **caractérisée en ce qu'**elle comprend :
un module d'envoi, configuré pour envoyer une première trame de type commande d'accès au support, MAC, à une deuxième station, la première trame MAC véhiculant un premier numéro de liaison et un champ indicateur, le premier numéro de liaison servant à identifier les identités de la première station et de la deuxième station et le champ indicateur indiquant, lorsqu'il est fixé à une valeur particulière, que la première trame MAC véhicule le premier numéro de liaison ; et
un module de réception, configuré pour recevoir une deuxième trame MAC envoyée par la deuxième station, la deuxième trame MAC véhiculant un deuxième numéro de liaison et un champ indicateur, le deuxième numéro de liaison servant à identifier les identités de la première station et de la deuxième station et le champ indicateur indiquant, lorsqu'il est fixé à une valeur particulière, que la deuxième trame MAC véhicule le deuxième numéro de liaison ;
le champ indicateur étant un champ d'adresse de la première trame MAC et de la deuxième trame MAC ; la première trame MAC et la deuxième trame MAC étant au format de la norme 802.11.

5. Première station selon la revendication 4, laquelle première station comprend en outre un module d'allocation, lequel est configuré pour permettre à la première station d'allouer le premier numéro de liaison pour une liaison entre la première station et la deuxième station.

6. Première station selon la revendication 4, dans laquelle le deuxième numéro de liaison est le même que le premier numéro de liaison, ou le deuxième numéro de liaison est obtenu par modification de la valeur numérique d'une position spécifique du premier numéro de liaison.
